# EUROPEAN PATENT SPECIFICATION

(11) **EP 1 965 477 B1**
(45) Date of publication and mention of the grant of the patent: **15.10.2008**
(21) Application number: 07425068.9
(22) Date of filing: 06.02.2007
(51) Int. Cl.: H02G 3/00, H01R 25/14

(54) **Modular system for forming preassembled elbow, T, X or flexible connection joints for prefabricated sections of electrical ducting.**
Modularsystem von Bögen-, T-, X- oder biegsamen vormontierten Verbindungen für Vorgefertigte Kabelkanalprofile
Système modulaire pour former des joints de connexion préassemblés en forme de coudes, de T, de X ou flexibles pour sections préfabriquées de conduits électriques

(43) Date of publication of application: 03.09.2008
(73) Proprietor: Bticino S.p.A., 20154 Milano (IT)
(72) Inventor: Fabrizi, Fabrizio, 24100 Bergamo (IT)
(74) Representative: Simino, Massimo

(56) References cited:
- LU-A- 39 137
- US-A- 3 605 064
- US-A- 4 053 194

## Description

This invention relates to a modular system for forming preassembled elbow, T, X or flexible interconnection joints, which are preferably leaktight, for prefabricated sections of electrical ducting.

It is known that composite electrical ducting, comprising prefabricated sections connected together which can be configured according to various requirements and which can have electrical connections made at any point along their length by means of electrical plugs inserted into the ducting, are widely used in commercial and industrial buildings to form electrical power and lighting distribution systems.

In these systems it is generally necessary to make elbow, T and X joints, as well as butt connections between the various lengths.

Systems for interconnecting lengths of electrical ducting which have a solely mechanical function in that the various lengths are only intended to contain and protect electrical conductors of the continuous type located in the ducting once its mechanical installation is complete are known for example from US3,023,032 and US4,349,220.

These interconnection systems require laborious assembly of the system on site and are also unsatisfactory from the aesthetic point of view because they have visible projections from the profile of the ducting, such as flanges, stirrups and the like.

Prefabricated lengths of generally leaktight electrical ducting in which conducting bars are provided mounted in an insulating support and extending over the entire length of the prefabricated length are also currently in use to simplify the provision of electrical power distribution systems.

Examples of this type of electrical ducting are known from US5,614,697 and EP0015356 which last relates in particular to ducting suitable for a suspended system.

Obviously for this type of ducting, interconnection between the various lengths requires both a mechanical coupling and an electrical coupling as is particularly shown by US5,614,697 in the case of a butt joint.

However the joint has to be assembled on the site of the system and is laborious to make, as well as not being very aesthetic.

US4,053,194 discloses an electrical junction assembly for electrically coupling mating bus bars of two adjacent tracks having single or double sets of bus bars.

The assembly may contain the electrical conductors for supplying current to the bus bars. Moreover the assembly may be L, I, T or X shaped but, depending on the shape, all the several elements forming the assembly must be differently shaped.

GB907331 (equivalent to LU39137) discloses a flexible junction device for distribution conduits with bar conductors, which requires laborious assembly on site, is not suitable for plug in connection to the conduits and is unsatisfactory from the aesthetic point of view, because it has visible projections from the profile of the conduits.

In a recent European patent application filed by the applicant of this patent application it has been proposed a butt joint which mechanically and electrically connects two lengths of ducting and which satisfies multiple requirements, such as simplicity of installation, in that the joint can be preassembled in the factory, and, in case, already connected to a length of ducting, leaktight electrical connection and modularity of the components which makes it possible to satisfy various application requirements.

In addition to this the joint satisfies aesthetic requirements for the system in that once installed it is completely hidden by the joined lengths of ducting and does not disturb the continuity of shape in the ducting.

In line with this, the present invention provides a modular preassembled interconnection system for prefabricated lengths of electrical ducting which by using a small number of components, including the butt joint to which the patent application mentioned relates, makes it possible to obtain a variety of types of angle, T and X types of interconnections, or even flexible joints, essentially using the same components and satisfying all the requirements indicated above.

Aspects of the invention as characterised by the claims and its advantages will be more apparent from the following description of a preferred embodiment with reference to the appended drawings in which:
- Figure 1 is an exploded perspective view of a preferred embodiment of an electrical butt joint and a terminal portion of a length of electrical ducting to which the joint is intended to be connected, the joint being used in the modular interconnection system to which this invention relates,
- Figure 2 is an exploded perspective view of a preferred embodiment of the electrical connector for the joint in Figure 1,
- Figure 3 is a perspective view of the joint in Figure 1 preassembled at the extremity of the length of ducting,
- Figure 4 is a perspective overall view of an L-shaped interconnection joint formed using the modular interconnection system according to this invention,
- Figure 5 is a perspective overall view of a T-shaped interconnection joint formed using the modular interconnection system according to this invention,
- Figure 6 is an overall perspective view of an X-shaped interconnection joint formed using the modular interconnection system according to this invention,
- Figure 7 is an overall perspective view of the various components which according to this invention are together used to form the L, T and X interconnection joints in Figures 4, 5, 6,
- Figure 8 is a perspective, partly exploded view, of a preferred embodiment of the electrical connector for forming the interconnection joints in Figures 4, 5, 6,
- Figure 9 is a perspective, partly exploded view, of the connector in Figure 8 from a different viewpoint,
- Figure 10 is a perspective, partly exploded view, of an L-shaped interconnection joint formed using the modular interconnection system according to this invention,
- Figure 11 is a perspective, partly exploded view, of a T-shaped interconnection joint formed using the modular interconnection system according to this invention,
- Figure 12 is a perspective, partly exploded view, of an X-shaped interconnection joint formed using the modular interconnection system according to this invention,
- Figure 13 is an exploded partial perspective view of a flexible interconnection joint formed using the modular interconnection system according to this invention,
- Figure 14 is a complete perspective view of the flexible joint in Figure 13.

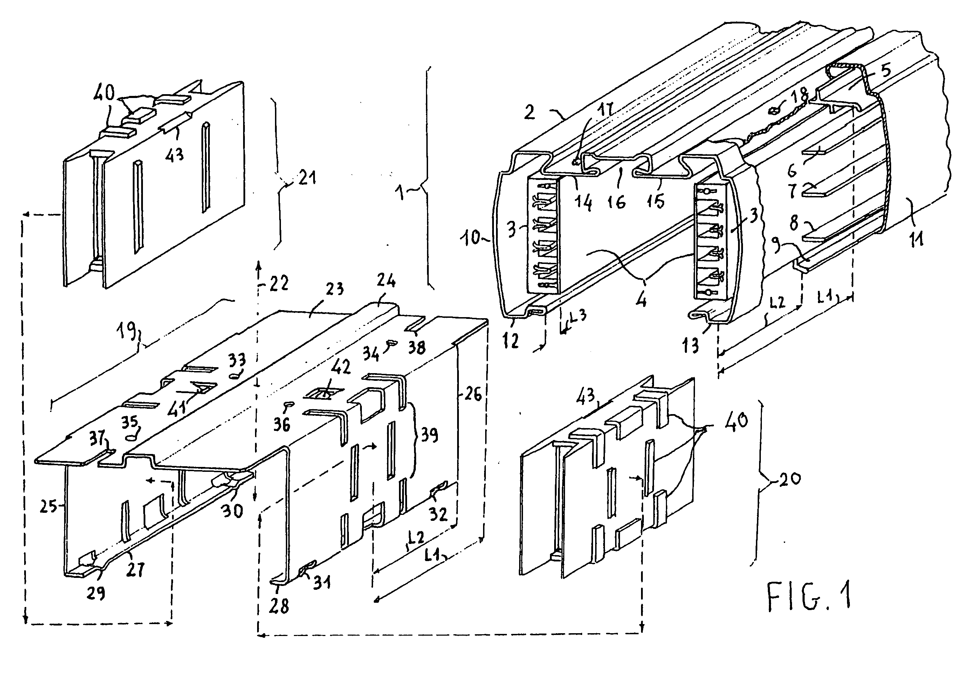

With reference to Figure 1, before going into the specific detail of the modular interconnection system it is desirable to consider a preferred embodiment of a length of ducting and its butt joint.

Length of ducting 1 essentially comprises a rectilinear metal enclosure 2 of bent sheet or extruded light alloy forming a channel open beneath (which is closed off by a removable panel, not shown, snap connected to the enclosure), on the sides of which are housed two identical rectilinear supports 3 extruded from insulating plastics material.

According to the requirements of the application enclosure 2 may house only one of the two supports.

In support 3, which has a transverse rectangular cross-section, there is formed a plurality of rectilinear parallel slots open on one side of the support, in each of which a conducting member is housed.

In the preferred embodiment, illustrated in Figure 1, the slots are six in number and house four conducting bars having a T cross-section coextruded with the support (the material of which includes the T head) for the distribution of a three phase voltage/current system and its neutral, as well as two conducting bars of circular cross-section for an auxiliary single-phase voltage.

The slots are hermetically sealed except at their ends by an insulating perforatable plastics sheet 4 welded or extruded over the entire surface of the support into which the slots open.

As shown in the detail in Figure 1, in which enclosure 2 is partly removed to show its interior, on the side of support 3 opposite that onto which the slots open and on the bottom and top surfaces of the support there are spacing ribs 5,6,7,8,9 which position the support at a convenient distance from the inner face of enclosure 2.

Spacing ribs 5 and 9 also bring about snap connection of support 3 onto enclosure 2, which is suitably shaped for the purpose.

In particular the side walls 10, 11 of enclosure 2 end at the bottom in an internally bent saddle 12, 13 which acts as a support for supports 3 and into which rib 9 of the supports is inserted.
Incidentally the free extremities of the two saddles form a continuous engaging tooth for snap attachment of a removable panel covering the enclosure. In turn the upper wall of the enclosure has a pair of internal ribs 14, 15 separated by a channel 16.

Rib 5 of supports 3 snap engages the sides of ribs 14, 15.

For a more detailed description of this ducting, which is not essential for the purposes of this invention, reference should be made to European patent application EP06425836.1 filed on the 14/12/2006.

It is important to note here that spacer ribs 5, 6, 7, 8, 9, being obtained by the process of extruding support 3, do not extend over the entire length of the support but, as illustrated in Figure 1, are interrupted as a result of partial removal therefrom, by milling or cutting in the course of the production process, at a convenient distance from the extremity of enclosure 2. This applies to the other extremity, which is not illustrated.

In particular, rib 5, which extends from the top surface of the support, is interrupted at a convenient distance L1, while the other ribs 6-9 are interrupted at a convenient distance L2 which is smaller than L1.

In this way the extremity portion of support 3 has no encumbrances outside its rectangular cross-section over a length of the enclosure equal to L2.

It should also be noted that the extremities of supports 3 are not flush with the extremity of enclosure 2, but are set further back from the latter by a convenient distance L3.

This is for reasons which will be more apparent below.

Finally it will be noted that ribs 14, 15 have holes 17, 18 at a convenient distance from the extremity of enclosure 2, obviously made in the course of the production process, for the insertion of fixing rivets or threaded inserts attached to the enclosure by calking, again in the course of the production process.

In its details Figure 1 shows only one extremity of the length of ducting, but it is clear that the opposite extremity has the same appearance.

In point of fact the only difference may be that while at least one of holes 17, 18 is provided with a threaded insert (hole 18 in Figure 1) at one extremity, the threaded inserts are absent at the other extremity.

In order to connect together, mechanically and electrically, lengths of ducting such as that described, in which only one of supports 3 may be present, a modular joint comprising a saddle 19 obtained by blanking and bending metal sheet, and at least one electrical connector 20 or, if required by the requirements of the application, a pair of identical electrical connectors 20, 21 are conveniently used.

Saddle 19, having a profile which is symmetrical with respect to a vertical axis 22, comprises a rectangular plate 23 extending over a length equal to 2L1 (indicatively 300 mm) and a width (indicatively 79 mm) such that it can be inserted with some play into enclosure 2, alongside ribs 14, 15.

Plate 23 has a rib 24 in the direction of its length which is inserted with minimal play into channel 16 of enclosure 2.

The plate extends laterally as two parallel side members, 25, 26 which are bent downwards and end in two lips 27, 28 parallel to plate 23 and facing each other.

The length of the side members in the direction of rib 24 is equal to 2L2 (indicatively 206 mm) and their size is such that they can be inserted within enclosure 2 with some play without interfering with supports 3, with the lips located within saddles 12, 13 of the enclosure.

Obviously ribs 5, 6, 7, 8, 9 of support 3 (or of the supports) form a stop which defines the depth to which saddle 19 can be inserted into the enclosure, which is equal to exactly half the longitudinal length of the saddle.

In order to take up vertical play lips 27, 28 are provided with projections 29, 30, 31, 32 at their extremities (obtained in the cutting and bending process) which extend downwards and are relatively yielding (to be specific as a kind of leaf spring) which, interfering with saddles 12, 13 of enclosure 2, press plate 23 into contact with ribs 14, 15 of the enclosure.

For its part, rib 24, by engaging in channel 16, ensures precise transverse and axial positioning of saddle 19 relative to enclosure 2.

Suitable openings 33, 34, 35, 36 and grooves 37, 38 are provided in plate 23 and when saddle 19 is inserted into two abutting enclosures they align with corresponding openings 17, 18 provided in the enclosures and allow the saddle to be attached to the enclosures by means of rivets if the saddle is preassembled with one of the enclosures or by means of a screw engaging the threaded insert calked in opening 18 in the case of in situ assembly.

The purpose of this is to avoid having to have a riveter available at the point of installation, assembly being then effected using an ordinary screwdriver.

Assembly is further simplified by partly prescreewing the screw into the threaded insert bevelled in hole 18 to which groove 38 in plate 23 corresponds, so that the presence of the screw does not interfere with the insertion of plate 23 into the enclosure.

In this way assembly is reduced to merely screwing up the screw.

In order to connect connectors 20, 21 to saddle 19, the latter is further provided with appropriate openings collectively identified by the reference number 39 into which corresponding ribs projecting from the outer walls of the connectors are housed, these being also collectively identified by the reference number 40.

The connection between openings 39 and ribs 40 ensures that the connectors are accurately positioned on the inside of side members 25, 26 and prevent any dislocation of the connectors when saddle 19 is inserted into each of the two enclosures which have to be butt joined.

Connectors 20, 21 are anchored in saddle 19 by two corresponding resilient tongues 41, 42 formed in plate 23 by cutting and bending.

These tongues form a pair of teeth which make a snap connection with one edge of the connectors provided for the purpose with a convenient recess 43 by pressing the connectors in contact with the inside of side members 25, 26.

Connectors 20, 21 essentially comprise prismatic sleeves of insulating plastics material which when saddle 19 is inserted into the ends of two lengths of ducting fit onto the ends of supports 3 housed therein.

Double metal clamps are provided within the connectors. The clamps, by penetrating the slots in support 3 without interfering with plastics sheet 4 which hermetically seals the slots, clamp the extremities of the conducting bars housed therein.

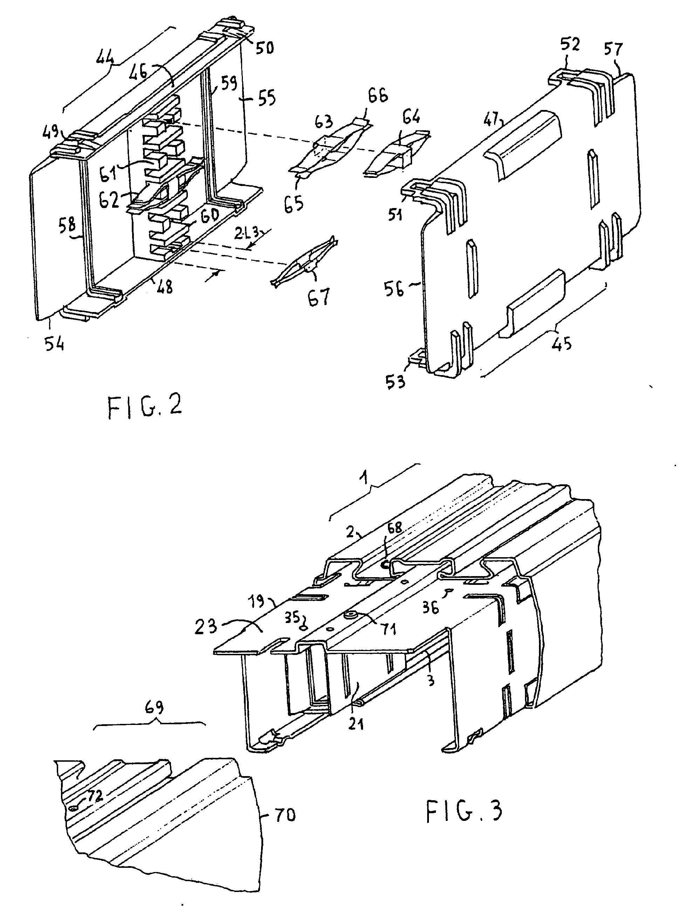

For completeness of description Figure 2 shows a preferred embodiment of these connectors in an exploded perspective view.

The connector in Figure 2 comprises two shells 44, 45 of insulating plastics material open at the ends. The shells are coupled together with a partial overlap of edges 46, 47.

One of the shells, namely shell 44, is provided, at the extremities of each of the two coupling edges 46, 48 of a pair of teeth 49, 50 (only one pair can be seen in Figure 2), which project externally and form a snap connection with corresponding relatively resilient eyes 51, 52, 53 (a fourth is not visible) formed on the coupling edges of the other shell 45.

Once the two shells have been snapped together, the overlapping edges are conveniently welded together by ultrasonic welding to form a leaktight joint.

Close to the open extremities the two shells are provided internally with a resilient seal 58, 59 which is conveniently but not necessarily co-moulded together with the shells.

The internal transverse cross-section of the sleeve so formed is substantially identical to that of supports 3 (Figure 1) so that the sleeve can be fitted onto the extremities of the two supports 3 which abut together and ensure a leaktight joint.

In order to assist insertion of the extremities of the support into the sleeve, the latter is provided with fins 54, 55, 56, 57 with a wedge-shaped cross-section, which fins project from the two openings. These fins make it possible to align the sleeve and the extremities of the supports precisely in the transverse direction so that insertion takes place without damage to insulating plastics sheet 4 (Figure 1) which hermetically seals off the slots in which the conducting bars are housed.

Within the two shells 44, 45, in their median portion, there are a plurality of dividing septa and teeth, collectively and respectively identified by reference numbers 60 and 61, which form a plurality of housings for double electrical contact clamps equal in number to the number of connecting bars which have to be connected, only one of which, 62, is shown correctly positioned in its housing for ease of drawing.

Figure 2 again shows a preferred embodiment of the contact clamps, in an exploded view, these comprising a contact member 63 obtained by the double bending of a H-shaped tin-coated or silver-coated copper plate by die-cutting, and a leaf spring 64, also obtained by double bending an H-shaped spring steel (or stainless steel) plate.

Spring 64, which is mounted so as to overlap contact member 63, in the form of a rider, exerts the necessary contact pressure on pair of clamps 65, 66 formed by contact member 63.

A simpler form of double contact clamp comprising a single contact member, in this case made of phosphor bronze and identified by reference number 67, can be used to connect the auxiliary voltage conductors, which in general have to carry lesser currents of the order of a few amperes.

As an alternative multiple cage contacts possibly with a steel pressure spring can be used, with provision for the removal of part of the insulating material of support 3 at the extremities of supports 3 by milling so as to wholly expose the extremities of the auxiliary voltage conductors.

In Figure 2 the longitudinal extent of dividing septa 60 (that is in the direction in which supports 3 are inserted) is equal to the dimension of teeth 61 in the same direction and is equal to twice L3.

This is in order to prevent interference with supports 3 when the latter are inserted into the connector.

It is however obvious that in order to improve insulation between the conductors in terms of surface resistance, dividing septa 60 may be of greater length, always lying between resilient seals 58, 59, by providing suitable milled grooves at the extremities of supports 3 in order to receive these additional lengths.

Figure 3 shows the joint described above preassembled in the factory with a ducting length 1, in perspective view.

It will clearly be seen that metal saddle 19 is half inserted into metal enclosure 2 of the ducting and is attached thereto by rivets, one of which, 68, can be seen in the figure.

The sleeve connectors, one of which 21 can be seen in the figure, and each of which is fitted up to half its length over the extremity of a corresponding support 3 for the conducting bars, are correctly anchored within the saddle.

It will not be forgotten that the modular nature of the joint (and the length of ducting) makes it possible to provide for only one connector in the joint.

Preassembly of the joint with a length of ducting simplifies the work of in situ installation.

As shown in Figure 3, the butt joint between two lengths of ducting 1 and 69 merely requires the ends of the lengths to be placed together and the exposed part of saddle 19 to be fully inserted into second duct 69.

When the operation is performed with length 1 already fitted in the suspended condition it is obvious that saddle 19 acts as a supporting stirrup for length 69 which has to be connected, and the operation is rendered easier.

Once insertion is complete, length 69 may be secured to length 1 by a screw passing through groove 37 which has been prescrewed into a threaded insert provided in the end of enclosure 70 of length 69.

The screw is tightened using an ordinary screwdriver inserted into enclosure 70 through its bottom opening.

As an alternative, if this is considered more convenient, or at the same time, it is also possible to provide one or more threaded inserts, such as insert 71 in Figure 3, located on rib 24 of saddle 19 into which tightening screws are inserted through openings 72 provided in enclosure 70, in this case screwed up from above, that is from the top of the enclosure.

It should be noted that attachment of the saddle to the two enclosures by screws or rivets ensures continuity between the enclosures so that these can be used as earth conductors.

A preferred embodiment is presented in the above description and in the appended drawings, but it is clear that many variants may be provided.

For example, if the requirement that the electrical connection be leaktight is not required and supports 3 for the conducting bars are without insulating plastics sheet 4, the two shells 44, 45 (Figure 2) which form the connectors can be without resilient seals 58, 59 and may be simply snapped together by engaging teeth 49, 50 in corresponding eyes 51, 52, 53 without it being necessary to weld the two overlapping edges of the shells together.

Thus using the same basic modular structure it is possible to satisfy various application requirements, with substantial savings in production processes and in the consumption of materials.

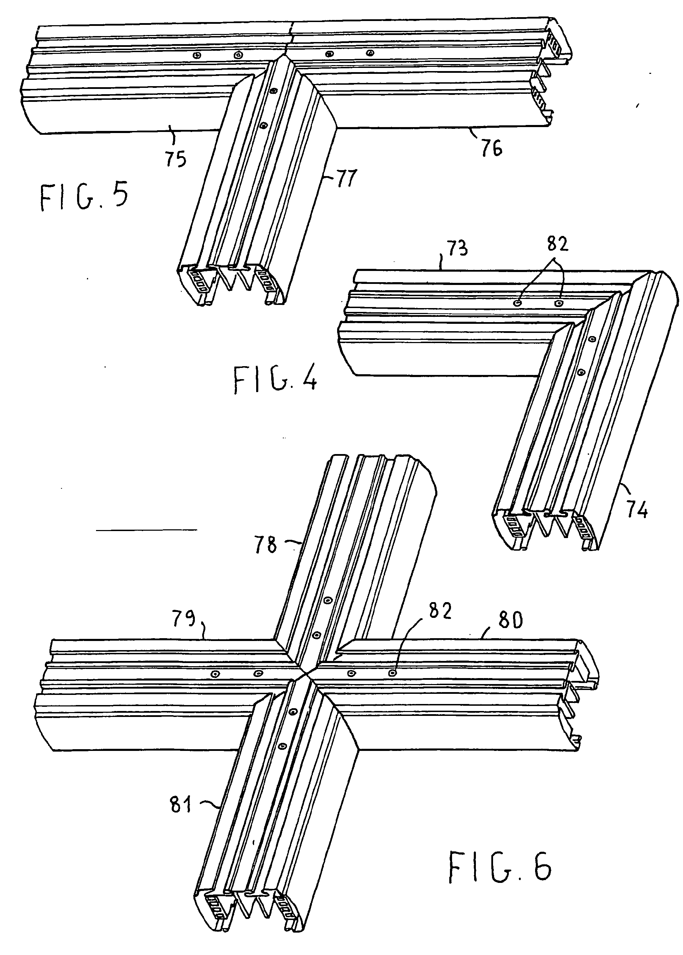

After this long introduction the substance of this invention can now be described.
In fact it comprises making angle, T or X interconnection joints such as those illustrated in the perspective views in Figures 4, 5, 6 respectively using modular and to a large extent repetitive elements.

These joints are formed by short lengths 73, 74 (Figure 4), 75, 76, 77 (Figure 5), 78, 79, 80, 81 (Figure 6) of ducting enclosure 2 which are connected together to form the type of interconnection required and which house mechanical and electrical components within them in such a way that the open extremities of the joints are configured in precisely the same way as the extremities of the lengths of ducting.

Thus the interconnecting joints, of whatever nature they may be (L, T or X does not matter) can be connected to various lengths of ducting (2, 3 or 4 as appropriate) using hidden butt joints such as that previously described which are preferably preassembled with the lengths of ducting or with the interconnecting joints themselves.

It will first of all be noted that lengths 73-81 are of only three types:
- lengths (73, 74) with one extremity cut on the diagonal,
- lengths (75, 76) with one extremity cut on the diagonal and truncated,
- lengths (77-81) with one extremity cut as a wedge.

The number of lengths of different type is therefore restricted, with significant simplifications in manufacture and the management of stocks; above all the lengths are obtained using the same manufacturing process as is used to produce the lengths of ducting.

Furthermore, lengths of the second and third type can be obtained from those of the first type, in a precut form, through a further cutting operation.

In the different types of joint the lengths are joined together by means of rivets 82 or self-tapping screws 2 which attach them to a common mechanical plate housed within the lengths.

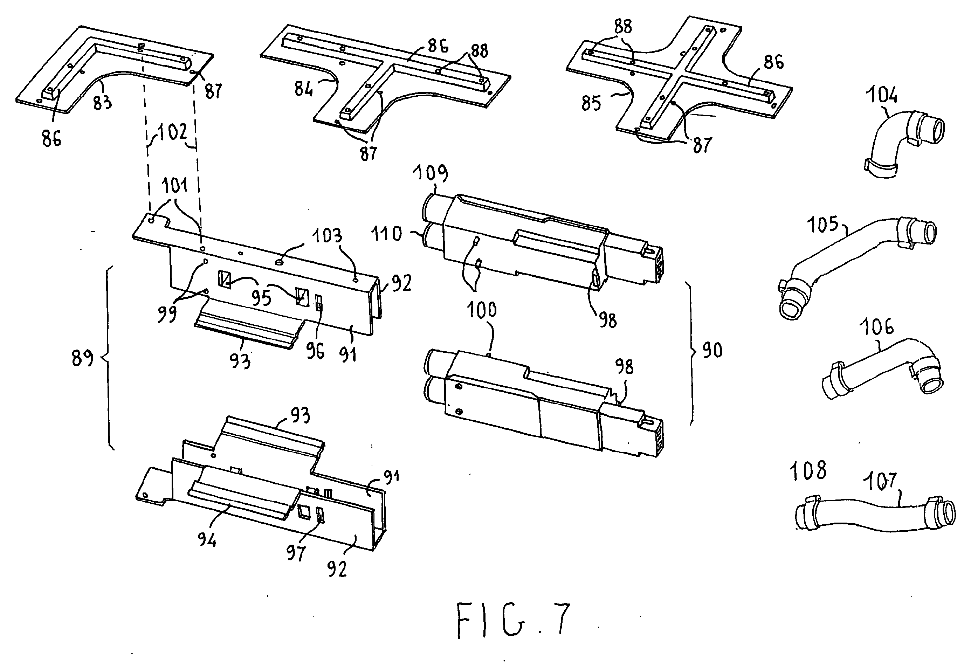

Also the number of different components which go to make up the various types of interconnecting joints is restricted and is collectively illustrated in Figure 7, where the different components are shown in a perspective view.

First of all there are three metal plates 83, 84, 85, one for each type of joint, obtained by die-cutting, with L, T and X shapes respectively.

Rib 86 formed by drawing, of L, T and X shape in the different plates, is used as a component to stiffen the plates.

It also acts as a guide when forming the various types of joint, preferably in an automated way, being housed in channel 16 (Figure 1) of the lengths of enclosure 2.

Suitable openings, collectively identified by the reference number 87, are made in plates 83, 84, 85.

Other openings, collectively identified by reference number 88, are made in rib 86 of the various plates.

Openings 88 in ribs 86 are used for mechanically attaching the lengths of enclosure to the plates by means of rivets 82 (Figures 4, 5, 6) or self-tapping screws.

Openings 87 in the plates are used for the mechanical attachment, by means of rivets, of a plurality of identical mechanical supporting members (2, 3 or 4 depending upon the type of interconnection joint which has to be made) for a plurality of electrical connectors 90, all of which are identical. Attachment between the plates and supporting members may also be brought about by electrical spot welding, in which case openings 87 may be replaced by simple positioning projections obtained by die-cutting.

Figure 7 shows one of supporting members 89 and one of electrical connectors 90 in two opposing perspective views.

Mechanical supporting member 89 comprises a metal (preferably steel) saddle obtained by die-cutting and bending, with two parallel sides 91, 92 which extend into two coplanar wings 93, 94 at their free extremities.

A pair of cuts which make it possible to obtain stiffening tongues 95 bent towards the interior of the saddle are made in sides 91, 92.

A slot 96, 97 is also formed in each side member for the insertion of an engaging tooth 98 with which each connector 90 is provided, and a pair of openings 99 on each side member into which corresponding self-tapping anchoring screws 100 with which the connectors are provided are inserted.

As an alternative openings 99 may be tapped or house threaded inserts.

A first pair of holes 101 for attaching the saddle to a metal plate 83, or 84, 85 by means of rivets or self-tapping screws inserted into corresponding openings 87 in the plate are provided on the upper wall of saddle 89.

Alternatively the two components may be joined together by electrical spot welding, in which case pair of holes 101 can be used to receive a positioning projection.

For example, the two dotted lines 102 indicate the direction in which saddle 89 is attached to plate 83.

A second pair of openings 103 is used to attach saddle 19 of a butt joint to saddle 89, overlapping the same (Figure3).

Saddle 19 is therefore placed between the length of enclosure fixed onto metal plate 83 (84, 85) and saddle 89, which is also attached to metal plate 83, below it.

Clearly the thickness of plates 83, 84, 85 is at least the same as or slightly greater than that of saddle 19, and more specifically its upper plate 23 (Figure 3).

Attachment is brought about by means of a screw screwed into a threaded insert provided in one of openings 103 (Figure 7) in connector supporting saddle 89 and in a corresponding insert 71 (Figure 3) in butt joint saddle 19, or by riveting, carried out in the factory, if the butt joints are preassembled with interconnection joints.

The set of components involved in forming the different types of interconnection joints is completed by a number of sleeves of relatively resilient material such as rubber and the like of suitable shape and length, 104, 105, 106, 107.

These sleeves are only essential if it is wished to obtain leaktight interconnection joints. If not they are superfluous.

The sleeves are used to house interconnecting electrical conductors between different connectors enclosing them in a sheath whose extremities are each leaktightly coupled with a pipe union for the passage of cables in connectors 90.

It will be noted in Figure 7 that connectors 90 are provided with a pair of adjacent unions 109, 110 to satisfy the various requirements arising in the formation of L, T and X joints, as will be more apparent below.

If a union is not used, it can be sealed off by an ordinary cap of resilient material (not shown in Figure 7) in order to ensure leaktight closure.

Preferably but not necessarily sleeves 104-107 are provided with ordinary tightening clamps 108 at their extremities.

Through suitable choice of the resilient material, sleeves 105, 106, 107 of substantially equivalent length may be replaced by a single sleeve which is easily bent in order to take up different shapes.

We will now examine the structure of connector 90 in greater detail.

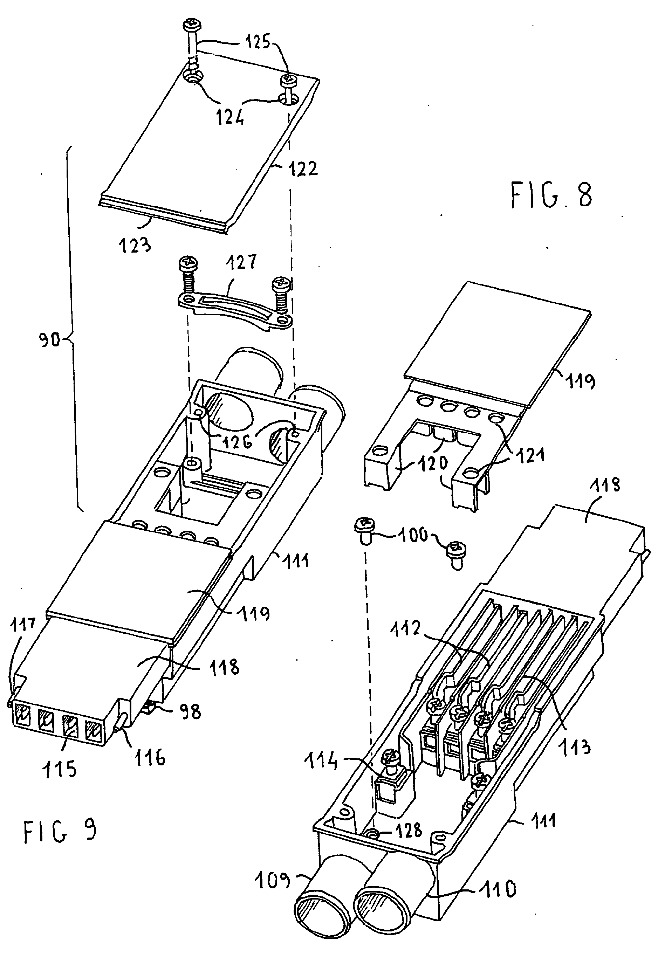

Figure 8 and 9 show a preferred embodiment of connector 90 in a partly exploded perspective view and from two different viewpoints.

With reference to these figures, connector 90 comprises an elongated box 111 of insulating material (for example polyamide containing glass fibres) which is open on one side and within which is housed a plurality of conducting bars, collectively identified by reference number 112, equal in number to the number of conducting bars present in supports 3 of the lengths of electrical ducting (Figure 1).

The conducting bars are separated from each other by insulating dividing septa, collectively identified by reference number 113, obtained through the process of moulding the box, within which there are also formed housings for tightening terminals, collectively identified by reference number 114.

Terminals 114, which are equal in number to the number of conducting bars 112, are preferably of the sleeve type and one extremity of each of conducting bars 112 is secured in each of these as well as the extremity of an electrical conductor, not shown, inserted into box 111 through one or other of the two end openings 109, 110 with which box 111 is provided.

At extremity 118 of the box opposite that at which the openings are provided conducting bars 112 extend in openings formed in the body of the box and ending in recesses, collectively identified by reference number 115 (Figure 9), into which contact clamps 62 (Figure 2) of the butt joints can be inserted.

As an alternative to recesses 115, the length of box 111 and conducting bars 112 can be dimensioned in such a way that they project somewhat from the extremity of box 111, as in fact illustrated for conducting bars 116, 117 (Figure 9), which are designed to be electrically connected to the distribution bars of an auxiliary voltage in supports 3 of the lengths of ducting.

In every case the external dimensions of extremity 118 of box 111 and its cross-section are identical to those of the extremities of supports 3.

The box is partly closed off by a first cover 119, of insulating plastics material, connected to the box (after the conducting bars and terminals have been placed in the box) by ultrasonic welding or other suitable means (thermal compression).

Projections 120 formed within the cover lock the conducting bars and terminals in position, while openings 121 formed in the cover allow access to the terminal tightening screws in order that they can be tightened.

A second removable cover 122, provided with a nesting tooth 123 and openings 124 for the passage of tightening screws 125, completely closes off box 111, partly overlapping first cover 119.

A seal which is co-moulded with or placed upon the edges of cover 122, or, as an alternative, on the edges of the box, provides a leaktight connection between the two components as a result of the pressure exerted by screws 125, which are screwed into corresponding seats 126 formed in the box.

The structure of the connector is completed by a conventional removable cable-clamping saddle 127 housed within box 111, by the aforementioned external engaging tooth 98 and by a pair of openings, one of which 128 can be seen in Figure 8, for the passage of screws 100 which anchor the connector to supporting saddle 89 (Figure 7).

Hermetic sealing of openings 124 and 128 is ensured by tightening the screws housed therein, but if preferred it is also possible to provide washer seals co-moulded with box 111 and its cover, or fitted onto screws 100 and 125.

Specifically the connector described comprises a body which is hermetically sealed except for the openings for the passage of the conducting bars at extremity 118 and except for unions 109, 110.

We will now consider how the various elements previously described are combined together to form the different types of interconnection joint.

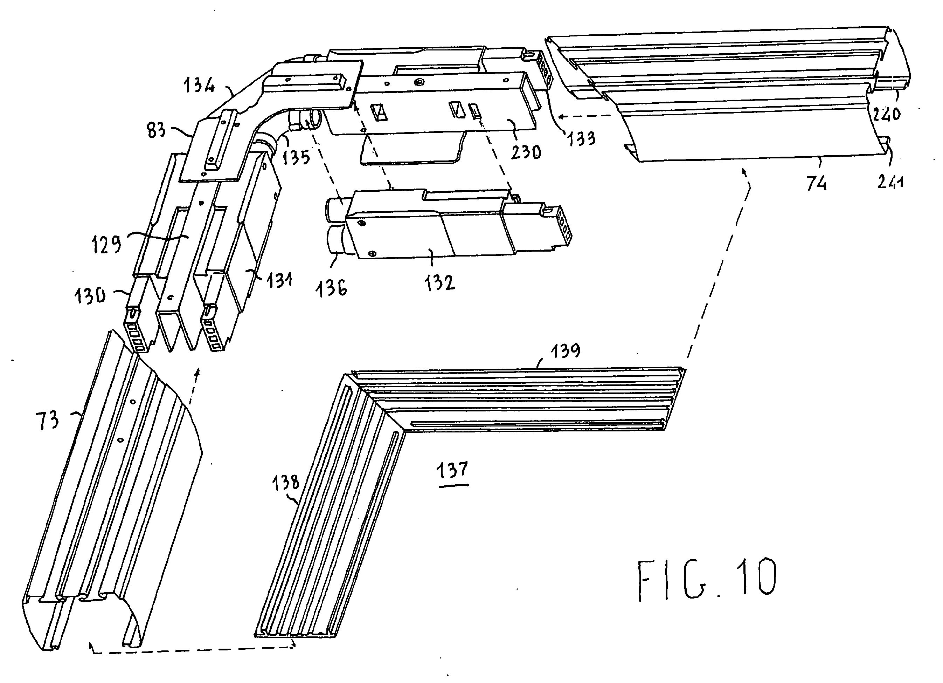

Figure 10 shows an angle interconnection joint.

In this case a plate 83 serves as a mechanical anchoring member for two lengths of enclosure 73, 74 and two connector supporting saddles 129, 230, which are identical to saddle 89 in Figure 7.

Pairs of connectors 130, 131 and 132, 133, all identical to connector 90 in Figure 7, are fitted to each of the saddles.

If the application requirements are more limited it is also possible to fit a single connector onto each of saddles 129, 230, according to all the possible combinations offered by the four positions for installation, for example pair 230, 132 or 230, 133, or 131, 132, or again 131, 133.

The various connectors are connected to pairs of sleeves 134, 135 fitted to a union of the connectors.

The sleeves ensure that the connection is leaktight.

Depending upon the arrangement of the connectors which have to be connected, the sleeves are selected as to shape and length from the set of sleeves 104-107 in Figure 7.

The connector unions which are not used for connection are sealed off by a cap. In Figure 10 it will be noted that one union of connector 132 is sealed by a cap 136.

As an alternative, in order to ease insertion of the lengths of electrical cable required to make electrical connection between the conducting bars of different connectors into the sleeves, the pair of unions in each connector can be used to form a double connection between two connectors.

Specifically, an angle interconnection joint is obtained in which the different connectors are leaktightly connected together and the joint can be leaktightly connected to two lengths of ducting using two leaktight butt joints such as that described with reference to Figures 1-3.

The entire process of forming the interconnection joint can be carried out in the workshop, largely, if not entirely, by automated equipment.

In this way users are offered a finished product whose installation requires nothing more than making a joint between two lengths of ducting provided with a preinstalled butt joint (Figure 3) and mechanically securing the angle interconnection joints with the two lengths of ducting by means of screws.

As an alternative the angle interconnection joint may be provided with one or even two preinstalled butt joints for attachment to lengths of ducting not provided with the butt joints.

The butt joints will if necessary ensure a leaktight coupling between the interconnection joint and the lengths of ducting.

In addition to this the interconnection joint in Figure 10 may be conveniently provided and marketed with a removable panel 137 closing off the lower opening of the lengths of enclosure and snap connected to the edges 240, 241 of lengths of enclosure 73, 74.

This panel may be obtained as a single unit by moulding plastics material or, preferably, may comprise two lengths 138, 139 taken from a panel closing off lengths of ducting, which is obtained using a more economical extrusion process.

A preferred embodiment of this panel is fully described in abovementioned European patent EP06425836.1.

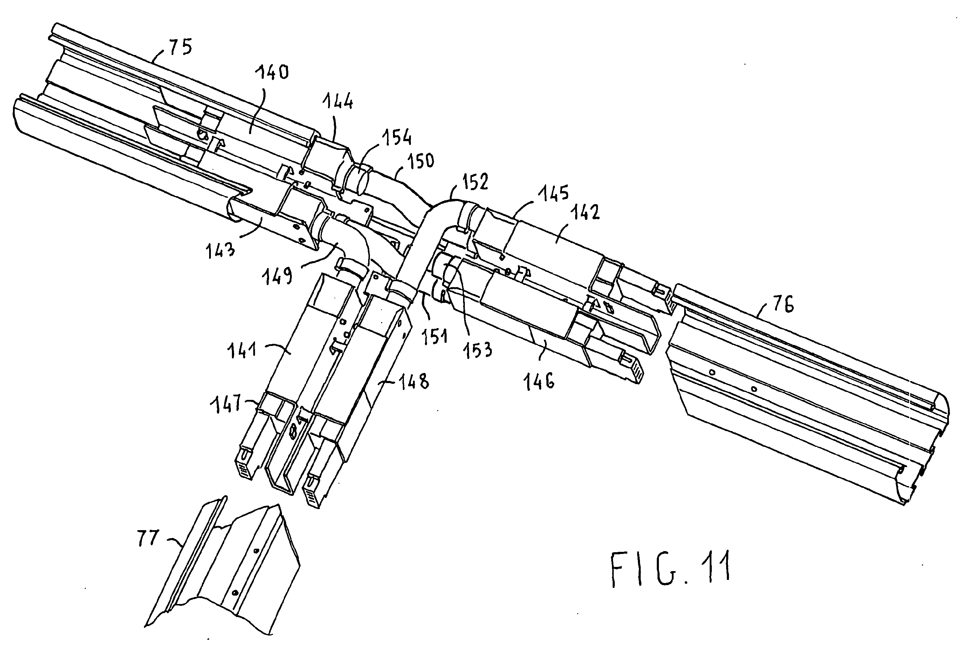

The structure of a T-shaped interconnection joint, illustrated in Figure 11, is not very different.

In this case a plate 84 serves as the mechanical anchoring member for three lengths of enclosure 75, 76, 77 and a set of three connecting supporting saddles 140, 141, 142, which are identical to saddle 89 in Figure 7.

A pair of connectors 143, 144 is fitted to each of the saddles, 143, 144 (to saddle 75) 145, 146 (to saddle 76) and 147, 148 to saddle 141.

A smaller number of connectors may again be used in this case in order to satisfy different application requirements.

The various connectors are connected by sleeves 149, 150, 151, 152 which ensure a leaktight connection.

The unused pipe unions in the connectors are closed off by caps 153, 154.

Because the space available to house the sleeves is limited, in order to prevent spatial interference between the sleeves if all three pairs of connectors are present, as is illustrated, the electricity supply to one of the connectors is obtained indirectly via an intermediate connector.

For example, if it is assumed that connector 146 receives an electricity supply from the length of ducting to which it is connected, the electrical connection will be made directly between connector 146 and connector 143 by means of conductors housed in sleeve 151, while the supply to connector 147 will be made indirectly via the conductors housed in sleeve 149 which connect connector 143 to connector 147.

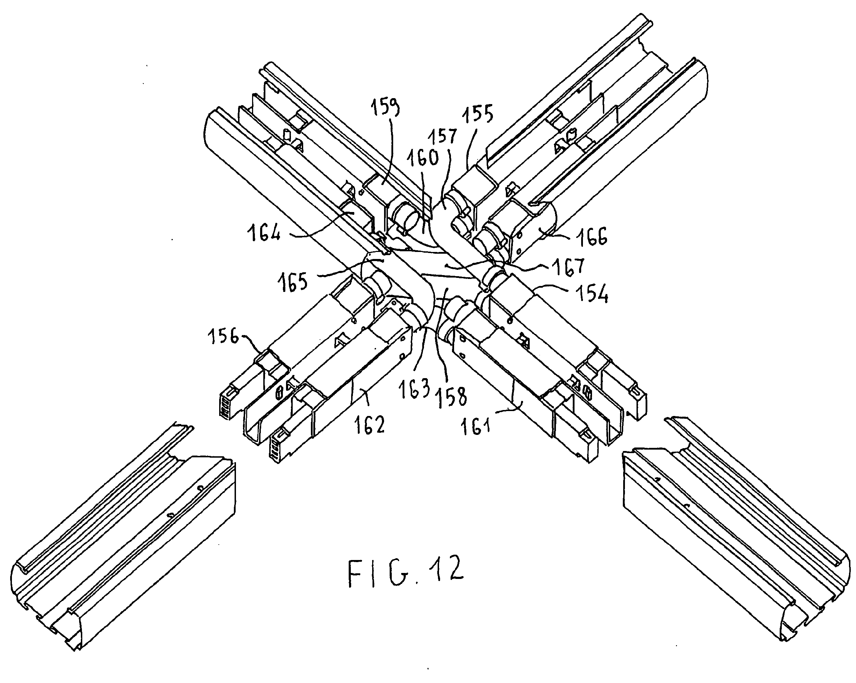

The same problem arises, and is solved in the same way, in the X interconnection joint illustrated in Figure 12.

Neglecting the mechanical aspects of connection between the different lengths of enclosure, a common plate and the supporting saddles of the connectors, which can be deduced immediately from what has been said above, it will be noted that connector 154 is directly connected to connectors 155 and 156 by means of two sleeves 157 and 158, but obviously it cannot be connected directly to connector 159 because it has only two outlet openings.

The connection is therefore made indirectly through a sleeve 160 (and the electrical conductors housed therein) which is connected to connector 155 on the one side and connector 159 on the other.

Similarly connector 161 is directly connected to connector 162 through sleeve 163 and indirectly to connector 164 through sleeve 165.

An indirect connection is also made to connector 166 through sleeve 167 connecting connector 166 and connector 164.

Clearly the number of indirect connections is reduced if less than 8 are fitted in the interconnection joint, for example, as in the most common case, only four.

Spatial dimensions permitting, it is also possible to use connectors with three outlet unions instead of two.

The modular preassembled interconnection system described above is also suitable for making flexible joints.

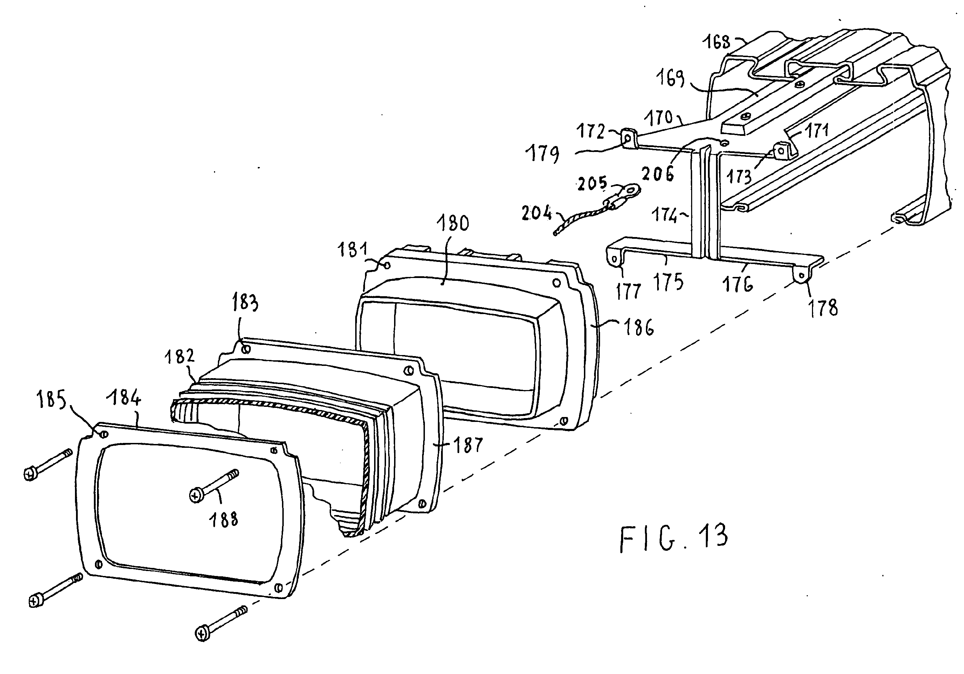

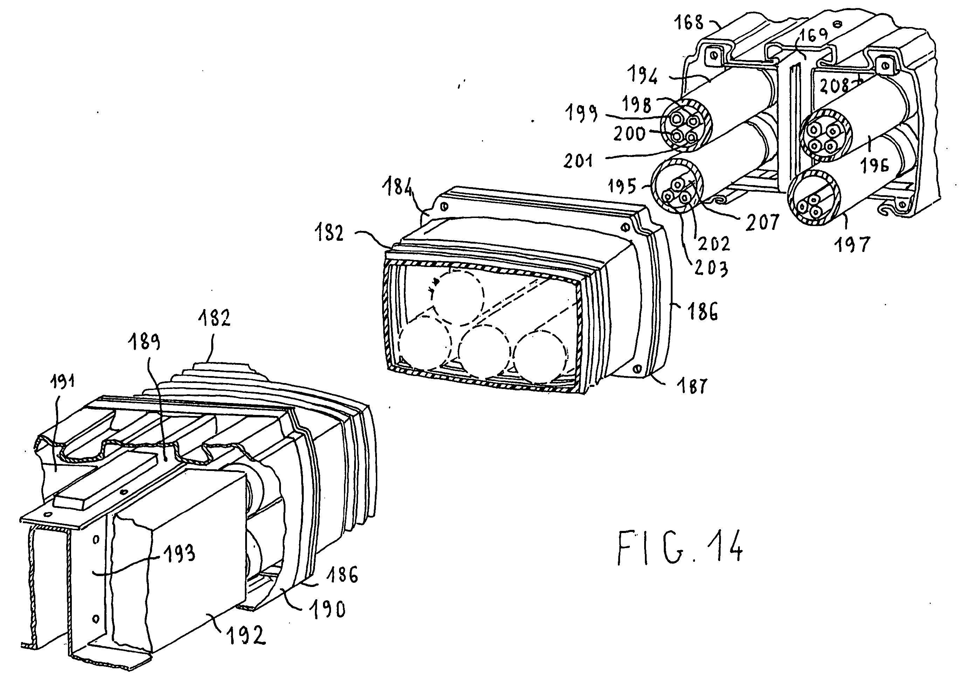

A preferred embodiment of this type of joint is illustrated in the exploded perspective views in Figure 13 and Figure 14.

In Figure 13 a length of enclosure 168, in this case truncated perpendicularly to its longitudinal length is fixed in a plate 169 which is functionally equivalent to plates 83, 84, 85 in Figure 7.

Plate 169 extends laterally as two wings 170, 171 with extremities 172, 173 bent upwards, which when plate 169 is attached to length of enclosure 168 lie flush with its extremity, within it.

Also, plate 169 extends beneath as an arm 174, bent into a right angle with respect to the plane of the plate and ending in two wings 175, 176 which extend laterally parallel to the plane of the plate, with extremities 177, 178 folded downwards.

These two extremities also lie flush with the end of length of enclosure 168 when the plate is attached to it, within it.

Extremities 172, 173, 177, 178 each have a hole which is tapped or within which a threaded insert is calked.

The holes are collectively identified by reference number 179.

Arm 174 is suitably stiffened by a rib.

A flanged union 180, of plastics material such as PVC or polyamide containing glass fibre, having an external flange profile 186 which is substantially identical to the transverse profile of length of enclosure 168, is fitted into the extremity of the latter.

Flange 186 is provided with four holes, collectively identified by reference number 181, which when the union is connected to length of enclosure 168 align with holes 179.

A bellows tube 182, of rubber or plastics material (soft PVC), with flanged extremities and an extremity flange profile 187 identical to that of flange 186 is fitted onto union 180.

Flange 187 is also provided with four openings, collectively identified by reference number 183, which align with openings 181 when tube 182 is fitted onto union 180.

A metal ring 184, fitted onto bellows tube 182, provided with four openings collectively identified by reference number 185, into which four screws, collectively identified by reference number 188 and intended to be screwed into holes 179, are inserted, are used to tighten flange 187 against flange 186 and attach the whole unit to plate 169.

It is clear that an identical structure to that described is present at the other extremity of the flexible joint.

Figure 14 shows the flexible joint as a whole, ending at one extremity in a unit comprising a length of enclosure 168, plate 169, a pair of connectors (or just one) identical to connector 90 in Figure 7, one of which 208 is partly visible in the figure.

The connectors are supported on a saddle, which is not visible, identical to saddle 89 in Figure 7.

The flanged extremity of bellows tube 182 is attached to this unit by means of screws 188 and ring 184, with flange 186 of union 180 in-between.

At the other extremity bellows tube 182 is connected to a plate 189, identical to plate 169, housed in a length of enclosure 190, identical to length 168 and attached thereto by riveting, with in between them a flange 208 identical to flange 186.

At this extremity pair of connectors 191, 192, which are identical to connector 90 in Figure 7 and are represented diagrammatically, can be seen at this extremity.

The connectors are mounted on the sides of a saddle 193 (identical to saddle 89 in Figure 7) attached to plate 189 by riveting.

Four flexible tubes 194, 195, 196, 197, of insulating material such as soft PVC, having a function equivalent to that of sleeves 104, 107 (Figure 3), are located in the flexible duct formed by bellows tube 182.

Even if only two tubes are sufficient it is preferable to use the four tubes in order to assist the insertion of a plurality of electrical conductors therein, distributing them in two tubes, for example with the conductors 198, 199, 200, 201 of a three phase voltage system (RSTN) housed in one tube 194 and/or 196 and with the conductors for an auxiliary voltage 202, 203 housed in the other tube 195 and/or 197.

It is clear that the number of tubes 194-197 will also depend on the number of electrical conductors such as 191, 192 housed in enclosures 168, 190.

If only one connector is present in these, only one flexible tube would be sufficient, but for the reasons already considered it is preferable to use two.

Tubes 194-197 are connected by their extremities to the unions of different connectors present in the flexible joint and are tightened thereon by tightening strips in such a way as to form a leaktight connection.

Furthermore, if it is not necessary to confine the electrical conductors in leaktight housings, tubes 194-197, as also sleeves 104-107 in the case of L, T and X joints), can be completely omitted.

It is clear that the flexible joint described can be assembled in the factory using predetermined lengths of bellows tube 182, possibly tubes 194-197 and conductors 198-203 housed therein in order to satisfy the greatest variety of application requirements.

Also the butt joints (Figures 1-3) which are necessary for coupling the flexible joint (and rigid interconnection joints) to lengths of ducting may be and are preferably preassembled in the factory together with the flexible joint (and the rigid interconnection joints).

The following consideration requires mention at this point.

The metal enclosure of the lengths of ducting is generally used as an earth conductor.

In the rigid interconnection joints previously described, including the butt joint, electrical continuity of the earth conductor is ensured by mechanical connection between the different metal parts.

This is not the case in the flexible joint previously described because bellows tube 182, of resilient material, rubber or soft PVC, gives rise to a break in the earth conductor.

In order to ensure continuity of the earth conductor in the case of the flexible joint it is therefore provided that an electrical conductor 189 (Figure 13) is housed in bellows tube 182. The conductor may be an ordinary copper plait 204, with an extremity ending in a lug 205 which is attached by means of a screw to plate 169, provided for this purpose with a tapped opening 206 or with an opening in which a threaded insert is fixed.

It is clear that a similar electrical connection will be made at the other extremity.

As an alternative one of screws 100 (Figure 7) attaching the connectors to the supporting saddles may be used as electrically conducting member to which connect, within the connectors, an earth conductor 207 (Figure 14) which is caused to pass, through a connector union, within one of tubes 194-197, if present.

Conveniently several earth conductors may also be provided.

## Claims

1. Prefabricated modular interconnection joint of elbow, T or X-shape for prefabricated lengths of electrical ducting (1), the lengths of ducting comprising a metal enclosure (2) in which there is housed at least one continuous support (3) of insulating material having a plurality of rectilinear slots each housing a conducting bar, the extremities of said at least one support being at a distance from said enclosure, comprising:
- a metal plate (83, 84, 85) shaped according to the nature of the interconnection joint,
- at least one pair of lengths (73, 74) of said enclosure (2), enclosing said metal plate (83, 84, 85) and attached thereto,
- at least one pair of identical metal saddles (89, 129, 230) attached to said plate and enclosed in the said lengths of enclosure,
- at least one pair of identical electrical connectors (90, 131, 132), each mounted on one of said saddles and enclosed in one of said lengths of enclosure, said electrical connectors having a first extremity (118) having a transverse cross-section identical to the transverse cross-section of the extremity of said support (3) and at a distance from the length of enclosure enclosing them, said connectors being provided at the opposite extremity with at least one pair of unions (109, 110) side by side, said connectors enclosing a plurality of conducting bars equal in number to that of the number of conducting bars in said support (3) which are accessible from said first extremity and electrically connected to corresponding cable clamping terminals (114) housed in said connectors.

2. Interconnection joints according to claim 1 comprising at least one sleeve (135) of resilient material with one extremity leaktightly fitted onto a first of the unions of two electrical connectors (130, 131), each fitted onto one of said metal saddles (129, 230), said sleeve housing lengths of electrical cable which engaging in said terminals (114) electrically connect together said two connectors (131, 132), said connectors being formed from a box (111) with one access opening leaktightly closed off by a removable cover (122), the second union of said connectors being leaktightly closed off by a cap (136) when not leaktightly connected to a second sleeve.

3. Interconnection joint according to claim 1 or 2 comprising at least one butt joint (19, 20, 21) preassembled with said interconnection joint, said butt joint comprising a metal saddle (19) axially inserted to half its length in one of said lengths of enclosure and at least one electrical connector (20) in the form of a sleeve attached to said saddle in its median position, said sleeve connector being fitted onto the extremity of one of said electrical connectors (131, 132) of the interconnection joint.

4. Interconnection joint according to claim 3 in which the coupling between the said electrical connector (20) in the form of a sleeve and one of the said electrical connectors (131, 132) of the interconnection joint is leaktight.

5. Modular prefabricated joint for the flexible interconnection of two prefabricated lengths of electrical ducting (1), the lengths of ducting comprising a metal enclosure (2) in which there is housed at least one continuous support (3) of insulating material having a plurality of rectilinear slots each housing a conducting bar, the extremities of said at least one support being at a distance from said enclosure (2), comprising:
- a pair of identical metal plates (169, 189) provided with means (171, 172, 177, 178, 179) for attachment to an extremity union (180),
- a pair of identical lengths (168, 190) of said enclosure (2), each enclosing one of said metal plates and attached thereto,
- a pair of identical metal saddles (193), each attached to one of said plates (169, 189) and enclosed in one of said lengths of enclosure,
- at least one electrical connector (192, 208) mounted on each of said saddles and enclosed in one of said lengths of enclosure, said electrical connector having a first extremity (118) with a transverse cross-section which is identical to the transverse cross-section of the extremity of said support (3) and at a distance from said length of enclosure which encloses it, said connector being provided at the opposite extremity with at least one pair of unions (109, 110) side by side, said connector enclosing a plurality of conducting bars (112) equal in number to the number of conducting bars of said support (3) which are accessible from said first extremity (118) and electrically connected to corresponding cable clamping terminals (114) housed in said connector,
- a pair of identical extremity unions (180), each attached to one of said plates (169, 189) by said means of attachment,
- a bellows tube (182), of insulating material, with each of its two extremities attached to one of said unions, and
- a plurality of electrical conductors (198, 199, 200, 201, 202, 203) electrically connected to said connectors (192) and enclosed in said bellows tube.

6. Flexible interconnection joint according to claim 5 comprising at least one flexible tube (194, 195, 196, 197) of insulating material enclosing said electrical conductors housed within said bellows tube (182), the extremities of which flexible tube are leaktightly connected to one of the unions (109, 110) of said connectors (192, 208).

7. Flexible interconnection joint according to claim 5 or 6 comprising at least one butt joint (19, 20, 21) preassembled with said flexible interconnection joint, said butt joint comprising a metal saddle (19) axially inserted by half its length into one of said lengths of enclosure, and at least one electrical connector (20, 21) in the form of a sleeve attached to said saddle in its median position, said sleeve being fitted to the extremity of one of said electrical connectors (192, 208) of the flexible interconnection joint.

8. Flexible interconnection joint according to claim 7 in which the coupling between said electrical connector (20, 21) in the form of a sleeve with one of said electrical connectors (192, 208) of the interconnection joint is leaktight.

9. Flexible interconnection joint according to claims 5, 6, 7, 8 comprising an earth conductor (204) housed in said bellows tube (182) and electrically connected to said pair of metal plates (169, 189).

10. Flexible interconnection joint according to claims 6, 7, 8, 9 comprising an earth conductor (207) housed in said flexible tube (195, 197) and electrically connected to said pair of metal plates (169, 189) through the electrical connectors (192, 208) of said flexible joint.

## Patentansprüche

1. Vorgefertigte modulare Zwischenverbindung in Ellbogen-, T- oder X-Form für vorgefertigte Elektrokanalteilstücke (1), die Kanalteilstücke umfassend: ein Metallgehäuse (2), worin mindestens ein kontinuierlicher Halter (3) aus Isoliermaterial untergebracht ist, welcher eine Mehrzahl von geradlinigen Schlitzen aufweist, die jeweils eine Leiterschiene aufnehmen, wobei die Enden des mindestens einen Halters in einer Distanz von dem Gehäuse liegen, umfassend:
- eine Metallplatte (83, 84, 85), geformt gemäß der Natur der Zwischenverbindung,
- mindestens ein Paar von Teilstücken (73, 74) des Gehäuses (2), welche die Metallplatte (83, 84, 85) einschließen und daran befestigt sind,
- mindestens ein Paar von identischen Metallsätteln (89, 129, 230), welche an der Platte befestigt und in den Gehäuseteilstücken eingeschlossen sind,
- mindestens ein Paar von identischen elektrischen Verbindern (90, 131, 132), jeweils an einem der Sättel montiert und in einem der Gehäuseteilstücke eingeschlossen, wobei die elektrischen Verbinder ein erstes Ende (118) aufweisen mit einem transversalen Querschnitt identisch zu dem transversalen Querschnitt des Endes des Halters (3) und in einer Distanz von dem sie einschließenden Gehäuseteilstück, wobei die Verbinder am gegenüberliegenden Ende mit mindestens einem Paar von Verbindungsstücken (109, 110) in Seite-an-Seite-Anordnung versehen sind, wobei die Verbinder eine Mehrzahl von Leiterschienen einschließen, deren Anzahl gleich der Anzahl der Leiterschienen in dem Halter (3) ist, die von dem ersten Ende zugänglich sind und mit korrespondierenden Kabelklemmanschlüssen (114), welche in den Verbindern untergebracht sind, elektrisch verbunden sind.

2. Zwischenverbindungen nach Anspruch 1, umfassend mindestens eine Hülse (135) aus elastischem Material, mit einem Ende dicht sitzend an einem ersten der Verbindungsstücke der zwei elektrischen Verbinder (130, 131) angeordnet, welche jeweils an einem der Metallsättel (129, 130) sitzen, wobei die Hülse Elektrokabelteilstücke aufnimmt, welche durch ihren Kontakt in den Anschlüssen (114) die zwei Verbinder (131, 132) elektrisch miteinander verbinden, wobei die Verbinder gebildet sind von einem Gehäuse (111), wobei eine Zugangsöffnung durch eine entfernbare Abdeckung (122) dicht abgeschlossen ist, wobei das zweite Verbindungsstück der Verbinder durch eine Kappe (136) dicht abgeschlossen ist, wenn es nicht mit einer zweiten Hülse dicht verbunden ist.

3. Zwischenverbindung nach Anspruch 1 oder 2, umfassend mindestens eine Stoßverbindung (19, 20, 21), vormontiert mit der Zwischenverbindung, wobei die Stoßverbindung einen Metallsattel (19) umfasst, welcher bis zu seiner halben Länge in eines der Gehäuseteilstücke axial eingeführt ist, und mindestens einen elektrischen Verbinder (20) in Form einer Hülse, der an dem Sattel in seiner mittleren Position befestigt ist, wobei der Hülsenverbinder an dem Ende eines der elektrischen Verbinder (131, 132) der Zwischenverbindung sitzt.

4. Zwischenverbindung nach Anspruch 3, wobei die Kopplung zwischen dem elektrischen Verbinder (20) in Form einer Hülse und einem der elektrischen Verbinder (131, 132) der Zwischenverbindung dicht ist.

5. Modulare vorgefertigte Verbindung für die flexible Zwischenverbindung von zwei vorgefertigten Elektrokanalteilstücken (1), die Kanalteilstücke umfassend: ein Metallgehäuse (2), worin mindestens ein kontinuierlicher Halter (3) aus Isoliermaterial untergebracht ist, welcher eine Mehrzahl von geradlinigen Schlitzen aufweist, die jeweils eine Leiterschiene aufnehmen, wobei die Enden des mindestens einen Halters in einer Distanz von dem Gehäuse (2) liegen, umfassend:
- ein Paar von identischen Metallplatten (169, 189), welche mit Mitteln (171, 172, 177, 178, 179) zum Befestigen an einem Endverbindungsstück (180) versehen sind,
- ein Paar von identischen Teilstücken (168, 190) des Gehäuses (2), von denen jedes eine der Metallplatten einschließt und daran befestigt ist,
- ein Paar von identischen Metallsätteln (193), welche jeweils an einer der Platten (169, 189) befestigt und in einem der Gehäuseteilstücke eingeschlossen sind,
- mindestens einen elektrischen Verbinder (192, 208), an jedem der Sättel montiert und in einem der Gehäuseteilstücke eingeschlossen, wobei der elektrische Verbinder ein erstes Ende (118) aufweist mit einem transversalen Querschnitt identisch zu dem transversalen Querschnitt des Endes des Halters (3) und in einer Distanz von dem ihn einschließenden Gehäuseteilstück, wobei der Verbinder am gegenüberliegenden Ende mit mindestens einem Paar von Verbindungsstücken (109, 110) in Seite-an-Seite-Anordnung versehen ist, wobei der Verbinder eine Mehrzahl von Leiterschienen (112) einschließt, deren Anzahl gleich der Anzahl der Leiterschienen in dem Halter (3) ist, die von dem ersten Ende (118) zugänglich sind und mit korrespondierenden Kabelklemmanschlüssen (114), welche in den Verbindern untergebracht sind, elektrisch verbunden sind,
- ein Paar von identischen Endverbindungsstücken (180), jeweils an einer der Platten (169, 189) durch die Befestigungsmittel befestigt,
- ein Balgrohr (182) aus Isoliermaterial, mit jedem seiner beiden Enden an einem der Verbindungsstücke befestigt, und
- eine Mehrzahl von elektrischen Leitern (198, 199, 200, 201, 202, 203), welche mit den Verbindern (192) elektrisch verbunden und in dem Balgrohr eingeschlossen sind.

6. Flexible Zwischenverbindung nach Anspruch 5, umfassend mindestens ein flexibles Rohr (194, 195, 196, 197) aus Isoliermaterial, welches die In dem Balgrohr (182) aufgenommenen elektrischen Leiter einschließt, wobei die Enden des flexiblen Rohrs mit einem der Verbindungsstücke (109, 110) der Verbinder (192, 208) dicht verbunden sind.

7. Flexible Zwischenverbindung nach Anspruch 5 oder 6, umfassend mindestens eine Stoßverbindung (19, 20, 21), vormontiert mit der flexiblen Zwischenverbindung, wobei die Stoßverbindung einen Metallsattel (19) umfasst, welcher über seine halbe Länge in eines der Gehäuseteilstücke axial eingeführt ist, und mindestens einen elektrischen Verbinder (20, 21) in Form einer Hülse, der an dem Sattel in seiner mittleren Position befestigt ist, wobei die Hülse an dem Ende eines der elektrischen Verbinder (192, 208) der flexiblen Zwischenverbindung sitzt.

8. Flexible Zwischenverbindung nach Anspruch 7, wobei die Kopplung zwischen dem elektrischen Verbinder (20, 21) in Form einer Hülse und einem der elektrischen Verbinder (192, 208) der Zwischenverbindung dicht ist.

9. Flexible Zwischenverbindung nach den Ansprüchen 5, 6, 7, 8, umfassend einen Erdleiter (204), der in dem Balgrohr (182) untergebracht und mit dem Paar von Metallplatten (169, 189) elektrisch verbunden ist.

10. Flexible Zwischenverbindung nach den Ansprüchen 6, 7, 8, 9, umfassend einen Erdleiter (207), der in dem flexiblen Rohr (195, 197) untergebracht und mit dem Paar von Metallplatten (169, 189) durch die elektrischen Verbinder (192, 208) der flexiblen Verbindung elektrisch verbunden ist.

## Revendications

1. Joint d'interconnexion modulaire préfabriqué en forme de coude, de T ou de X pour des tronçons préfabriqués de conduite électrique (1), les tronçons de conduite comprenant une enveloppe métallique (2) dans laquelle est logé au moins un support (3) continu de matériau isolant ayant une pluralité de fentes rectilignes logeant chacune une barre conductrice, les extrémités dudit au moins un support étant à une distance de ladite enveloppe, comprenant :
une plaque métallique (83, 84, 85) formée selon la nature du joint d'interconnexion,
au moins une paire de tronçons (73, 74) de ladite enveloppe (2), enveloppant ladite plaque métallique (83, 84, 85) et fixée dessus,
au moins une paire de selles métalliques identiques (89, 129, 230) fixées sur ladite plaque et enveloppées dans lesdits tronçons d'enveloppe,
au moins une paires de connecteurs électriques identiques (90, 131, 132), chacun monté sur l'une desdites selles et enveloppé dans l'un desdits tronçons d'enveloppe, lesdits connecteurs électriques ayant une première extrémité (118) ayant une section transversale identique à la section transversale de l'extrémité dudit support (3) et à une distance du tronçon d'enveloppe l'enveloppant, lesdits connecteurs étant pourvus à l'extrémité opposée d'au moins une paire de raccords union (109, 110) côte à côte, lesdits connecteurs enveloppant une pluralité de barres conductrices égales en nombre au nombre de barres conductrices dans ledit support (3) qui sont accessibles depuis ladite première extrémité et électriquement connectées à des bornes de serrage de câble correspondantes (114) logées dans lesdits connecteurs.

2. Joints d'interconnexion selon la revendication 1 comprenant au moins un manchon (135) de matériau élastique avec une extrémité montée de manière étanche sur un premier des raccords union de deux connecteurs électriques (130, 131), chacun monté sur une desdites selles métalliques (129, 130), ledit manchon logeant des tronçons de câble électrique qui viennent en prise dans lesdites bornes (114) connecte électriquement ensemble lesdits deux connecteurs (131, 132), lesdits connecteurs étant formés depuis un boîtier (111) avec une ouverture d'accès fermée hermétiquement par un couvercle amovible (122), le second raccord union desdits connecteurs étant fermé de manière étanche par un bouchon (136) quand il n'est pas connecté de manière étanche à un second manchon.

3. Joint d'interconnexion selon la revendication 1 ou 2 comprenant au moins un joint bout à bout (19, 20, 21) pré-assemblé avec ledit joint d'interconnexion, ledit joint bout à bout comprenant une selle métallique (19) insérée axialement sur la moitié de sa longueur dans l'un desdits tronçons d'enveloppe et au moins un connecteur électrique (20) sous la forme d'un manchon fixé sur ladite selle dans sa position médiane, ledit connecteur de manchon étant monté sur l'extrémité de l'un desdits connecteurs électriques (131, 132) du joint d'interconnexion.

4. Joint d'interconnexion selon la revendication 3 dans lequel le couplage entre ledit connecteur électrique (20) sous la forme d'un manchon et l'un desdits connecteurs électriques (131, 132) du joint d'interconnexion est étanche.

5. Joint préfabriqué modulaire pour l'interconnexion flexible de deux tronçons préfabriqués de conduite électrique (1), les tronçons de conduite comprenant une enveloppe métallique (2) dans laquelle est logé au moins un support (3) continu de matériau isolant ayant une pluralité de fentes rectilignes logeant chacune une barre conductrice, les extrémités dudit au moins un support étant à une distance de ladite enveloppe (2), comprenant :
une paire de plaques métalliques identiques (169, 189) pourvues de moyens (171, 172, 177, 178, 179) pour la fixation à un raccord union d'extrémité (180),
une paire de tronçons identiques (168, 190) de ladite enveloppe (2), chacun enveloppant l'une desdites plaques métalliques et étant fixé dessus,
une paire de selles métalliques identiques (193), chacune fixée sur l'une desdites plaques (169, 189) et enveloppée dans l'un desdits tronçons d'enveloppe,
au moins un connecteur électrique identique (192, 208), monté sur chacune desdites selles et enveloppé dans l'un desdits tronçons d'enveloppe, ledit connecteur électrique ayant une première extrémité (118) avec une section transversale qui est identique à la section transversale de l'extrémité dudit support (3) et à une distance dudit tronçon d'enveloppe l'enveloppant, ledit connecteur étant pourvu à l'extrémité opposée d'au moins une paire de raccords union (109, 110) côte à côte, ledit connecteur enveloppant une pluralité de barres conductrices (112) égales en nombre au nombre de barres conductrices dudit support (3) qui sont accessibles depuis ladite première extrémité (118) et électriquement connectées à des bornes de serrage de câble correspondantes (114) logées dans ledit connecteur,
une paire de raccords union d'extrémité Identiques (180), chacun fixé sur l'une desdites plaques (169, 189) par lesdits moyens de fixation,
un tube à soufflet (182), en matériau isolant, avec chacune de ses deux extrémités fixée sur l'un desdits raccords union, et
une pluralité de conducteurs identiques (198, 199, 200, 201, 202, 203) connectés électriquement auxdits connecteurs (192) et enveloppés dans ledit tube à soufflet.

6. Joint d'interconnexion flexible selon la revendication 5 comprenant au moins un tube flexible (194, 195, 196, 197) de matériau isolant enveloppant lesdits conducteurs électriques logés dans ledit tube à soufflet (182), les extrémités du tube flexible étant connectées hermétiquement à l'une des raccords union (109, 110) desdits connecteurs (192, 208).

7. Joint d'interconnexion flexible selon la revendication 5 ou 6 comprenant au moins un joint bout à bout (19, 20, 21) pré-assemblé avec ledit joint d'interconnexion, ledit joint bout à bout comprenant une selle métallique (19) insérée axialement sur la moitié de sa longueur dans l'un desdits tronçons d'enveloppe, et au moins un connecteur électrique (20, 21) sous la forme d'un manchon fixé sur ladite selle dans sa position médiane, ledit manchon étant monté sur l'extrémité de l'un desdits connecteurs électriques (192, 208) du joint d'interconnexion flexible.

8. Joint d'interconnexion flexible selon la revendication 7 dans lequel le couplage entre ledit connecteur électrique (20, 21) sous la forme d'un manchon avec l'un desdits connecteurs électriques (192, 208) du joint d'interconnexion est étanche.

9. Joint d'interconnexion flexible selon les revendications 5, 6, 7, 8 comprenant un conducteur de terre (204) logé dans ledit tube à soufflet (182) et connecté électriquement à ladite paire de plaques métalliques (169, 189).

10. Joint d'interconnexion flexible selon les revendications 6, 7, 8, 9 comprenant un conducteur de terre (207) logé dans ledit tube flexible (195, 197) et connecté électriquement à ladite paire de plaques métalliques (169, 189) par les connecteurs électriques (192, 208) dudit joint flexible.
